# EUROPÄISCHE PATENTSCHRIFT

(11) **EP 3 443 231 B1**
(45) Veröffentlichungstag und Bekanntmachung des Hinweises auf die Patenterteilung: **08.06.2022**
(21) Anmeldenummer: 17716155.1
(22) Anmeldetag: 04.04.2017
(51) Int. Cl.: F15B 21/00, F15B 13/04

(54) **ELEKTROPNEUMATISCHE VENTILGRUPPE**
ELECTROPNEUMATIC VALVE ASSEMBLY
GROUPE DE SOUPAPES ÉLECTROPNEUMATIQUE

(30) Priorität: 14.04.2016 DE 102016106909
(43) Veröffentlichungstag der Anmeldung: 20.02.2019
(73) Patentinhaber: HOERBIGER Flow Control GmbH, 86972 Altenstadt (DE)
(72) Erfinder: MOLNAR, Györg, 7111 Waldenbuch (DE); KIRN, Michael, 72213 Altensteig (DE); HILDEBRANDT, Benedikt, 70794 Filderstadt (DE); NEISS, Sebastian, 70197 Stuttgart (DE); SCHROBENHAUSER, Max, 86971 Peiting (DE); HALLER, Daniel, 70569 Stuttgart (DE); SCHAIBLE, Jochen, 72213 Altensteig (DE); BILRA, Manjeet, 85457 Wörth (DE)
(74) Vertreter: Grättinger Möhring von Poschinger Patentanwälte Partnerschaft mbB
(86) Internationale Anmeldenummer: PCT/EP2017/057915
(87) Internationale Veröffentlichungsnummer: WO 2017/178272

(56) Entgegenhaltungen:
- EP-A2- 1 637 743
- WO-A1-2004/027268
- DE-A1- 2 527 330
- DE-A1- 19 500 749
- US-A- 3 838 710

## Beschreibung

Die vorliegende Erfindung betrifft eine elektropneumatische Ventilgruppe, insbesondere zur Betätigung eines pneumatischen Arbeitsgliedes, umfassend eine elektropneumatische Pilotstufe mit mindestens einem Pilotventil und eine von der Pilotstufe angesteuerte pneumatische Leistungsstufe mit mindestens zwei Leistungsventilen, wobei jedes Pilotventil mindestens zwei pneumatisch mit dem Pilotventil gekoppelte Leistungsventile schaltet und wobei die Ventilgruppe ein Gehäuse mit einem elektrischen Signaleingang, einem Druckluftanschluss, wenigstens einem Entlüftungsanschluss und wenigstens einem Arbeitsausgang aufweist.

Derartige elektropneumatische Ventilgruppen sind aus dem Stand der Technik in verschiedenen Ausgestaltungen bekannt und finden als (mittels eines elektronischen Stellsignals angesteuerte) Stellungsregler zum Betätigen eines an dem wenigstens einen Arbeitsausgang anzuschließenden pneumatischen Arbeitsglieds (z.B. einer pneumatischen Armatur oder eines pneumatischen Antriebs) Verwendung.

Da dort mittels je eines Pilotventils, d.h. mittels des an einem Ausgang des Pilotventils erzeugten Steuerdrucks, gleichzeitig zwei Leistungsventile angesteuert werden, ist durch geeignete Gestaltung der Ventilgruppe bzw. der Leistungsventile sicherzustellen, dass die zwei Leistungsventile das gewünschte Schaltverhalten aufweisen.

Aus dem Stand der Technik vorbekannte elektropneumatische Ventilgruppen der eingangs genannten Art nutzen zur pneumatischen Ansteuerung der Leistungsventile häufig geradlinige, als Bohrung innerhalb eines metallischen Gehäuses erzeugte Kanäle mit darin eingepressten Drosseln, mit denen der zeitliche Verlauf des einem bestimmten Leistungsventil zugeführten Steuerdrucks und somit die Schaltzeiten der jeweiligen Leistungsventile dem konkret gewünschten Schaltverhalten angepasst werden können. Hierdurch erweist sich die herstellerseitige Anpassung des Schaltverhaltens des Ventils als fertigungstechnisch vergleichsweise komplex. Ferner ergibt sich aufgrund der langen Bohrungen, die eine entsprechende Drossel aufnehmen müssen, ein relativ großes Volumen für den vom Pilotventil zu erzeugenden Steuerdruck, was dann wiederum zu längeren Schaltzeiten führt.

Ferner ist aus der EP 1 133 651 B1 eine Ventileinrichtung mit schichtartigem Aufbau bekannt, bei welcher zwei zur Ansteuerung von zwei Leistungsventilen über eine Schaltwippe vorgesehene Ansteuerbereiche voneinander getrennt sind.

Weitere Ventileinrichtungen sind aus den EP 1637743 A2, US 3838710 A, WO 2004/027268 A1 bekannt.

Vor dem Hintergrund des vorstehend geschilderten Stands der Technik ist es die Aufgabe der vorliegenden Erfindung, eine elektropneumatische Ventilgruppe der gattungsgemäßen Art so auszugestalten, dass diese kostengünstig herstellbar und dabei derart modular aufgebaut ist, dass sie in besonders einfacher Weise möglichst flexibel an verschiedene kundenspezifische Anforderungen anpassbar ist.

Diese Aufgabe wird mit einer elektropneumatischen Ventilgruppe nach Anspruch 1 gelöst. Bevorzugte Ausgestaltungen und die Vorteile einer solchen Ventilgruppe ergeben sich aus den abhängigen Patentansprüchen und der nachfolgenden Beschreibung.

Die erfindungsgemäße pneumatische Ventilgruppe zeichnet sich neben den eingangs genannten Merkmalen dadurch aus, dass das Gehäuse schichtartig aufgebaut ist mit mindestens einem Pilotstufengehäuse und mindestens einem entlang einer im Wesentlichen ebenen Trennfläche an diesem angeschlossenen Leistungsstufengehäuse, wobei zwischen dem mindestens einen Pilotstufengehäuse und dem mindestens einen Leistungsstufengehäuse mindestens ein Dichtglied aufgenommen ist, das einen zwischen dem Pilotstufengehäuse und dem Leistungsstufengehäuse angeordneten Steuerdruckbereich umschließt, wobei der Steuerdruckbereich zwei Ansteuerbereiche für die zwei mit dem Pilotventil gekoppelten Leistungsventile und eine kanalartige Verbindung mit definiertem Strömungsquerschnitt zwischen den zwei Ansteuerbereichen aufweist, und wobei ein in dem Pilotstufengehäuse vorgesehener Ausgang des zugeordneten Pilotventils in den Steuerdruckbereich mündet.

Durch einen solchermaßen modularen und schichtartigen Aufbau des Gehäuses der Ventilgruppe, bei welchem der Steuerdruckbereich zwischen einander zuweisenden Oberflächen des Leistungsstufengehäuses und des Pilotstufengehäuses ausgebildet ist, lassen sich die Schaltzeiten der Leistungsventile auf besonders einfache Art und Weise beeinflussen bzw. aufeinander abstimmen.

Dies kann vorliegend insbesondere dadurch erfolgen, dass der Strömungsquerschnitt der die beiden Ansteuerbereiche verbindenden kanalartigen Verbindung für den jeweiligen Anwendungsfall geeignet angepasst wird. Der in den Steuerdruckbereich mündende Ausgang des Pilotventils muss dabei keine separaten Drosseln aufnehmen und kann - auch wegen des schichtartigen Aufbaus des Gehäuses der erfindungsgemäßen Ventilgruppe - als einfache Bohrung mit kurzer Länge ausgestaltet sein. Die von einem Pilotventil zum Schalten von zwei Leistungsventilen bereitgestellte Steuerluft strömt zunächst an einer geeignet vorgebbaren Stelle in den Steuerdruckbereich und dort durch die in vielfältiger Weise (z.B. mit Verengungen und/oder Umlenkungen) ausgestaltbare kanalartige Verbindung zwischen den beiden (je einem Leistungsventil zugeordneten) Ansteuerbereichen hindurch.

Die zur Beeinflussung der Schaltzeiten der Leistungsventile benötigte Drosselwirkung kann im Rahmen der vorliegenden Erfindung also insbesondere durch die konkrete Form und Anordnung des zwischen Pilotstufengehäuse und Leistungsstufengehäuse ausgebildeten Steuerdruckbereichs erzeugt werden. Zur Bemessung des Strömungsquerschnitts der die zwei Ansteuerbereiche des Steuerdruckbereichs fluidisch koppelnden kanalartigen Verbindung bestehen bei einer erfindungsgemäßen Ventilgruppe verschiedene einfach und kostengünstig zu realisierende Möglichkeiten, wie dies weiter unten noch näher ausgeführt wird.

In einer ersten bevorzugten Ausgestaltung der Erfindung kann vorgesehen sein, dass der Ausgang des Pilotventils in asymmetrischer Anordnung in den Steuerdruckbereich mündet. Hierzu sei nochmals kurz erläutert, dass der Steuerdruckbereich vorliegend zwei (je einem Leistungsventil zugeordnete) Ansteuerbereiche und eine kanalartige Verbindung zwischen diesen umfasst, wobei in einer erfindungsgemäßen Ventilgruppe, wenn diese mehr als ein Pilotventil umfasst, jedem Pilotventil ein separater Steuerdruckbereich und zwei hierüber anzusteuernde Leistungsventile zugeordnet sind. Der vorstehend erwähnte Begriff der "asymmetrischen Anordnung" bezieht sich auf diesen Steuerdruckbereich, so dass der in den Steuerdruckbereich mündende Ausgang des Pilotventils also vorteilhaft nicht exakt mittig in die kanalartige Verbindung zwischen den zwei Ansteuerbereichen mündet. Insbesondere bietet es sich in zweckmäßiger Ausgestaltung der Erfindung an, dass der Ausgang des betreffenden Pilotventils in einen der zwei Ansteuerbereiche des dem Pilotventil zugeordneten Steuerdruckbereichs mündet.

Erfindungsgemäß ist das wenigstens eine Dichtglied als geschlossene Schnurdichtung ausgeführt, die den - nach oben und unten durch das Pilotstufengehäuse und das Leistungsstufengehäuse (bzw. eine daran ggfs. anliegende Membran / Dichfläche) begrenzten - Steuerdruckbereich seitlich umläuft. Das Dichtglied ist also vorteilhaft zwischen Pilotstufengehäuse und Leistungsstufengehäuse dichtend verspannt, wobei ein als Schnurdichtung ausgestaltetes Dichtglied insbesondere als separates Bauteil aus einem geeigneten Elastomer (z.B. in einem Spritzgussverfahren) hergestellt sein kann. Der Strömungsquerschnitt der von dem Dichtglied seitlich begrenzten kanalartigen Verbindung kann somit in besonders einfacher Weise durch unterschiedliche Gestaltung und/oder unterschiedliche Anordnung des Dichtglieds variiert werden.

Erfindungsgemäß weist die dem Leistungsstufengehäuse zugewandte Oberfläche des Pilotstufengehäuses Nuten zur Aufnahme der Schnurdichtung auf, womit deren lagerechte Platzierung innerhalb der Ventilgruppe auf einfache Weise gewährleistet werden kann.

Erfindungsgemäß sind an der dem Leistungsstufengehäuse zugewandten Oberfläche des Pilotstufengehäuses, im Bereich der kanalartigen Verbindung zwischen zwei einander benachbarten Nuten, Erhebungen ausgebildet. Hierdurch ist die betreffende Erhebung im Bereich der kanalartigen Verbindung angeordnet,und kann in vorteilhafter Weise eine Art Steg realisiert werden, der die Querschnittsfläche der kanalartigen Verbindung pilotstufengehäuseseitig verkleinert und somit deren Strömungsquerschnitt verringert. Eine solche Erhebung bzw. ein durch eine solche Erhebung gebildeter Steg kann somit zur Reduzierung der Höhe des Steuerdruckbereichs beitragen, womit - im Bereich der kanalartigen Verbindung - eine gezielte Beeinflussung des Strömungsquerschnitts möglich ist.

Als besonders vorteilhaft erweist es sich im Rahmen der vorliegenden Erfindung außerdem, wenn die dem Leistungsstufengehäuse zugewandte Oberfläche des Pilotstufengehäuses auf einer Verteilerplatte ausgeführt ist, welche zusammen mit einem Basiskörper das Pilotstufengehäuse bildet. Hierdurch können etwaige im konkreten Anwendungsfall vorgesehene Nuten und/oder vorgenannte Erhebungen bzw. Stege an besagter Verteilerplatte ausgebildet und ggfs. für verschiedene Ventilgruppen unterschiedlich gestaltet werden, ohne dass hierfür sonstige Änderungen am Gehäuse der erfindungsgemäßen Ventilgruppe notwendig sind.

Weiterhin erweist es sich als vorteilhaft, dass eine solche - dem gewünschten Schaltverhalten der Ventilgruppe angepasste bzw. dieses beeinflussende - Verteilerplatte in einfacher Weise als Spritzgussteil aus Kunststoff hergestellt werden kann, wobei etwaige an der Verteilerplatte auszubildende Nuten, Erhebungen bzw. Stege oder sonstige Querschnittsvariationen für den Steuerdruckbereich in besonders einfacher und kostengünstiger Weise durch Verwendung verschiedener Werkzeugeinsätze in dem Spritzgusswerkzeug realisierbar sind.

Bevorzugt ist in dem Pilotstufengehäuse mindestens ein piezoelektrisches Pilotventil aufgenommen. Mit piezoelektrischen Pilotventilen lassen sich besonders schnell schaltende und präzise ansteuerbare Ventilgruppen erfindungsgemäßer Art realisieren. Ersichtlich sind dann, sofern die erfindungsgemäße Ventilgruppe mehrere Pilotventile umfasst, bevorzugt alle elektropneumatischen Pilotventile als piezoelektrische Pilotventile ausgestaltet.

Von Vorteil ist ferner, wenn die Druckluftversorgung des mindestens einen Pilotventils durch die Trennfläche hindurch geführt ist. Hierdurch kann ein am Leistungsstufengehäuse vorgesehener Druckluftanschluss, über welchen die Leistungsventile der erfindungsgemäßen Ventilgruppe mit Druckluft versorgt werden, gleichzeitig auch zur Druckluftversorgung für die Pilotventile dienen.

Außerdem ist von Vorteil, wenn in dem Pilotstufenund/oder Leistungsstufengehäuse ein Druckregler für die Druckluftversorgung des wenigstens einen Pilotventils integriert ist. Mit einem solchen Druckregler, der als solcher aus dem Stand der Technik bekannt ist, kann am Eingang des mindestens einen Pilotventils ein stabiler (und gegenüber dem an den Leistungsventilen benötigten Druck reduzierter) Druck zur Verfügung gestellt werden.

Eine weitere bevorzugte Ausgestaltung der vorliegenden Erfindung sieht vor, dass an der dem Pilotstufengehäuse zugewandten Oberfläche des Leistungsstufengehäuses (mindestens) eine Membran angeordnet ist, welche auf ihrer dem Pilotstufengehäuse zugewandten Seite den Steuerdruckbereich begrenzt und welcher an ihrer gegenüberliegenden Seite (im Bereich der beiden Ansteuerbereiche) Ventilkörper der beiden zugeordneten Leistungsventile anliegen. Die Ventilkörper der Leistungsventile, die hierzu bevorzugt mechanisch mit der Membran gekoppelt bzw. verbunden sind, werden dann also so betätigt, dass der von dem zugeordneten Pilotventil bereitgestellte Steuerdruck eine Auslenkung der Membran und des hieran anliegenden Ventilkörpers bewirkt, wodurch besagter Ventilkörper - je nach aktuellem Schaltzustand des Ventils - insbesondere von einem Dichtsitz abgehoben und/oder gegen einen Dichtsitz verschoben werden kann.

Bei einer erfindungsgemäßen Ventilgruppe kann in besonders zweckmäßiger Ausgestaltung der Erfindung vorgesehen sein, dass genau zwei Pilotventile und vier Leistungsventile vorgesehen sind, wobei von jedem Pilotventil über je einen Steuerdruckbereich zwei Leistungsventile angesteuert werden. Dabei erweist es sich weiterhin als vorteilhaft, wenn die vier Leistungsventile in Draufsicht auf die Trennfläche im Wesentlichen auf den Ecken eines Quadrats angeordnet sind, wobei jeweils die einander diametral gegenüberliegenden Leistungsventile miteinander gekoppelt sind, also vorteilhaft von einund demselben Pilotventil geschalten werden. Ersichtlich sind dann durch geeignete Gestaltung des wenigstens einen Dichtglieds in der Trennfläche insgesamt zwei (voneinander getrennte) Steuerdruckbereiche (mit je zwei Ansteuerbereichen und je einer kanalartigen Verbindung zwischen den Ansteuerbereichen zur Kopplung von zwei Leistungsventilen) vorzusehen.

Bevorzugt können die beiden hierfür zu bildenden Steuerdruckbereiche durch je ein Dichtglied oder durch insgesamt ein Dichtglied umgrenzt sein.

Weiterhin kann bei einer erfindungsgemäßen Ventilgruppe vorteilhaft vorgesehen sein, dass das Gehäuse wenigstens vier pneumatische Anschlüsse aufweist in Form von zwei paarweise an die vier Leistungsventile angeschlossenen Arbeitsausgängen, einem an zwei der Leistungsventile angeschlossenen Drucklufteingang und einer an die beiden anderen Leistungsventile angeschlossenen Entlüftung. Letztgenannte Entlüftung kann durch geeignete fluidleitende Verbindungen innerhalb des Gehäuses gleichzeitig als Entlüftung für das wenigstens eine Pilotventil dienen, wobei alternativ auch am Pilotstufengehäuse wenigstens ein separater Entlüftungsanschluss für das wenigstens eine Pilotventil vorgesehen sein kann.

Im Rahmen des ohnehin mehrteiligen Gehäusekonzepts kann darüber hinaus bevorzugt vorgesehen sein, dass das Leistungsstufengehäuse zwei- oder dreiteilig ausgeführt ist, wie dies nachfolgend anhand eines Ausführungsbeispiels noch näher erläutert wird.

Ferner erweist es sich als vorteilhaft, wenn die Leistungsventile als gegen einen Dichtsitz verschiebbare und/oder von einem Dichtsitz abhebbare Sitzventile ausgeführt sind. Im Gegensatz zu Schieberventilen kann hierdurch ein besonders leckagearmer bzw. leckagefreier Betrieb der erfindungsgemäßen Ventilgruppe gewährleistet werden.

Weiterhin kann bevorzugt vorgesehen sein, dass das (gesamte - ggfs. mehrteilige) Pilotstufengehäuse und das (gesamte - ggfs. mehrteilige) Leistungsstufengehäuse jeweils als Spritzgießteile aus Kunststoff ausgeführt sind, so dass sich gegenüber herkömmlichen, aus Metall bestehende Ventilgehäusen deutliche Kosteneinsparungen ergeben.

Und schließlich kann vorteilhaft noch vorgesehen sein, dass das Leistungsstufengehäuse einen separaten Gehäuseteil aufweist, welcher zumindest den Druckluftanschluss und die pneumatischen Arbeitsausgänge (zum Anschluss des mit der erfindungsgemäßen Ventilgruppe zu betätigenden pneumatischen Arbeitsglieds) aufweist. Nachfolgend werden Ausführungsbeispiele der Erfindung anhand der Zeichnung näher erläutert. Dabei zeigen
- Fig. 1: eine perspektivische Ansicht des Gehäuses eines Ausführungsbeispiels einer erfindungsgemäßen Ventilgruppe,
- Fig. 2-6: verschiedene perspektivische Ansichten von Teilen der erfindungsgemäßen Ventilgruppe gemäß dem Ausführungsbeispiel aus Fig. 1,
- Fig. 7: einen Schnitt durch die Ventilgruppe gemäß Schnittlinie A-A aus Fig. 1,
- Fig. 8: einen Schnitt durch die Ventilgruppe gemäß Schnittlinie B-B aus Fig. 1,
- Fig. 9a: ein erfindungsgemäßes Ausführungsbeispiel zur einfachen Variation des Strömungsquerschnitts der kanalartigen Verbindung in einer erfindungsgemäßen Ventilgruppe gemäß Schnittlinie C-C aus Fig. 4
- Fig.9b: ein nicht erfindungsgemäßes Beispiel zur einfachen Variation des Strömungsquerschnitts der kanalartige Verbindung in einer Ventilgruppe gemäß Schnittlinie C-C aus Fig.4 und
- Fig. 10: einen Pneumatikschaltplan eines Ausführungsbeispiels einer erfindungsgemäßen Ventilgruppe.

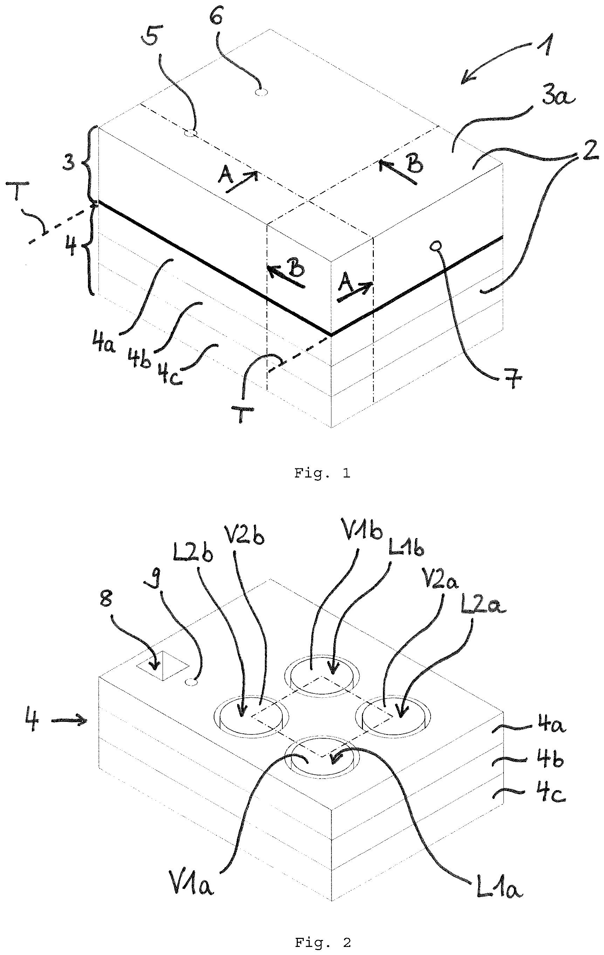

Die Fig. 1 - 8 zeigen verschiedene (Teil-)Ansichten bzw. Querschnitte eines Ausführungsbeispiels einer erfindungsgemäßen elektropneumatischen Ventilgruppe 1, welche insgesamt zwei Pilotventile P1, P2 und vier Leistungsventile L1a, L1b, L2a, L2b umfasst. Dabei dient das Pilotventil P1 zum Betätigen bzw. Schalten eines ersten Paars von Leistungsventilen L1a, L1b und das Pilotventil P2 zum Betätigen bzw. Schalten eines zweiten Paars von Leistungsventilen L2a, L2b, wie dies nachfolgend noch näher erläutert wird.

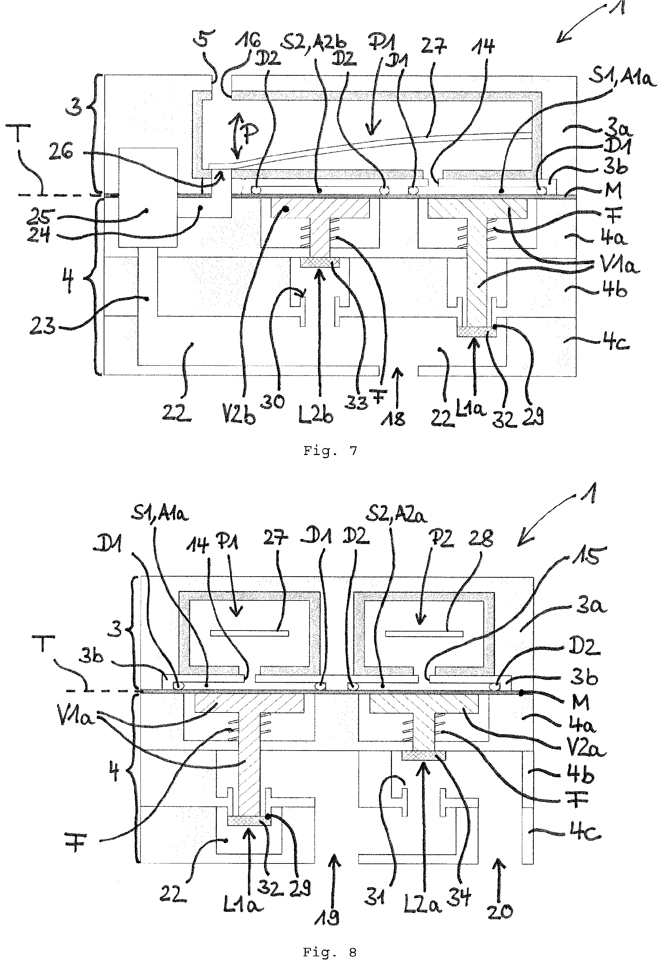

In der perspektivischen Darstellung des Gehäuses 2 des Ausführungsbeispiels der Ventilgruppe 1 gemäß Fig. 1 und den Schnitten gemäß Fig. 7 und 8 (entsprechend den Schnittlinieen A-A und B-B aus Fig. 1) durch die Ventilgruppe 1 ist gut zu erkennen, dass das Gehäuse 2 der Ventilgruppe 1 schichtartig aus einem Pilotstufengehäuse 3 und einem Leistungsstufengehäuse 4 aufgebaut ist, wobei Pilotstufengehäuse 3 und Leistungsstufengehäuse 4 entlang einer im Wesentlichen ebenen Trennfläche T aneinander angeschlossen sind. Das Pilotstufengehäuse 3 und das Leistungsstufengehäuse 4 sind auf geeignete Weise miteinander verbunden (z.B. miteinander verschraubt), was in den Figuren der besseren Übersichtlichkeit halber nicht dargestellt ist.

In Fig. 1 in Zusammenschau mit den Fig. 7 und 8 ist ferner zu erkennen, dass das Pilotstufengehäuse 3 und das Leistungsstufengehäuse 4 ihrerseits jeweils mehrteilig ausgestaltet sind. Das Pilotstufengehäuse 3 umfasst hierbei einen Basiskörper 3a und eine mit ihrer unteren Oberfläche dem Leistungsstufengehäuse 4 zugewandte Verteilerplatte 3b, welche zusammen das zur Aufnahme von insgesamt zwei Pilotventilen P1, P2 dienende Pilotstufengehäuse 3 bilden.

Auf der Oberseite des Pilotstufengehäuses 3 sind zwei Entlüftungsöffnungen bzw. Entlüftungsanschlüsse 5, 6 für die beiden darin vorgesehenen Pilotventile P1 und P2 vorgesehen. Ferner ist am Pilotstufengehäuse 3 ein elektrischer Signaleingang 7 zur elektrischen bzw. elektronischen Ansteuerung der beiden darin befindlichen elektropneumatischen Pilotventile P1 und P2 vorgesehen.

Das Leistungsstufengehäuse 4 ist ebenfalls mehrteilig und schichtartig (mit im Wesentlichen ebenen Trennflächen) aus insgesamt drei Gehäuseteilen 4a, 4b, 4c ausgestaltet, in welchen insgesamt vier Leistungsventile L1a, L1b, L2a, L2b aufgenommen sind. Dabei sind am untersten Gehäuseteil 4c die zu den verschiedenen Ventilen führenden pneumatischen Anschlüsse der Ventilgruppe 1 (mit Ausnahme der beiden Entlüftungsanschlüsse 5, 6 für die zwei Pilotventile P1 und P2) vorgesehen, was weiter unten in Zusammenhang mit den Fig. 7 und 8 noch näher erläutert wird.

Zum besseren Verständnis des Gehäusekonzepts des gegebenen Ausführungsbeispiels einer erfindungsgemäßen elektropneumatischen Ventilgruppe 1 zeigen die Fig. 2 bis 6 jeweils lediglich einen Teil des in Fig. 1 dargestellten Gehäuses 2 der Ventilgruppe 1 bei dessen sukzessivem Zusammenbau.

Fig. 2 zeigt ausschließlich das Leistungsstufengehäuse 4 mit insgesamt vier darin eingesetzten Leistungsventilen L1a, L1b, L2a, L2b bzw. deren gehäuseoberseitig erkennbaren Ventilkörpern V1a, V1b, V2a, V2b. Die rechteckige Aussparung 8 in dem obersten Gehäuseteil 4a des Leistungsstufengehäuses 4 dient der teilweisen Aufnahme eines Druckreglers, was nachfolgend anhand der Fig. 7 noch näher erläutert wird. Ferner ist in Fig. 2 im obersten Gehäuseteil 4a des Leistungsstufengehäuses noch eine Bohrung 9 zu erkennen, durch welche den Pilotventilen P1, P2 die zu deren Betrieb benötigte Druckluft zugeführt.

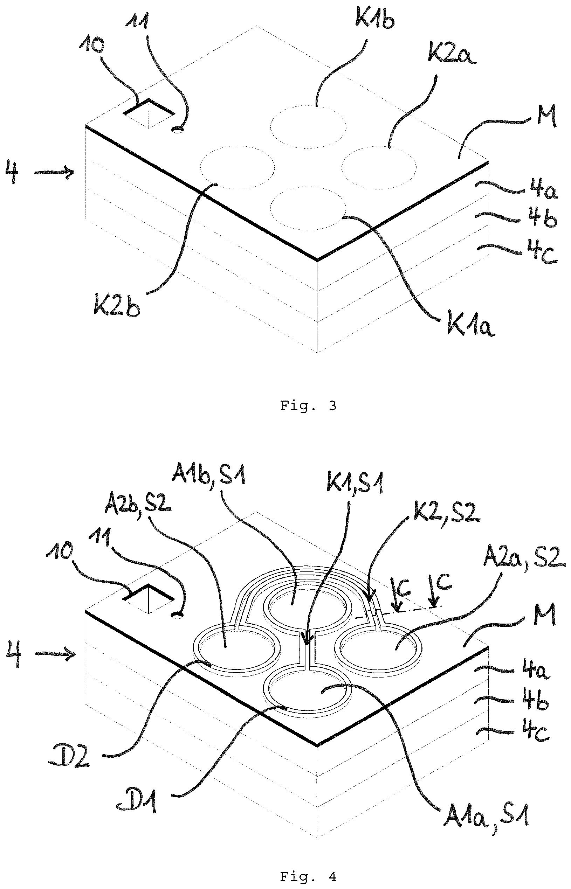

Fig. 3 zeigt nochmals das Leistungsstufengehäuse 4, wobei dort nun auf dessen Oberseite eine Membran M angeordnet ist, welche vorliegend im Wesentlichen die gesamte zum (in Fig. 3 nicht gezeigten) Pilotstufengehäuse 3 weisende Oberfläche des Leistungsstufengehäuses 4 überdeckt und welcher - im Innenbereich der vier durch gestrichelte Linien gezeichneten Kreise K1a, K1b, K2a, K2b - unterseitig die Ventilkörper V1a, V1b, V2a, V2b der vier Leistungsventile L1a, L1b, L2a, L1b anliegen und mit dieser mechanisch verbunden sind, so dass die Membran M in diesem Bereich (gemeinsam mit jeweiligen Ventilkörper) ausgelenkt werden kann. Im Bereich der gestrichelten Kreise K1a, K1b, K2a, K2b kann die Membran M vorteilhaft eine der Kontur der Kreises folgende Sicke bzw. eine wulstartige Strukturierung aufweisen und/oder dort (nach Zusammenbau des gesamten Gehäuses) fest mit dem Leistungsstufengehäuse 4 verklemmt sein, so dass eine Auslenkung der Membran M im Bereich eines Ventilkörpers V1a, V1b, V2a, V2b keinen Einfluss auf die übrige Membran M hat. Im Übrigen weist die Membran M vorliegend zwei Aussparungen 10, 11 auf, die zur Aussparung 8 und der Bohrung 9 im obersten Gehäuseteil 4a des Leistungsstufengehäuses 4 (vgl. Fig. 2) korrespondieren.

Fig. 4 zeigt wiederum das Leistungsstufengehäuse 4 mit der darauf befindlichen Membran M, wobei nun ergänzend zwei auf der Membran angeordnete Dichtglieder D1 und D2 in Form von geschlossenen Schnurdichtungen angeordnet sind, die - bei vollständig zusammengebautem Gehäuse 2 - je einen Steuerdruckbereich S1, S2 seitlich dicht umschließen bzw. umranden. Jeder dieser Steuerdruckbereiche S1 bzw. S2 wird gebildet durch zwei Ansteuerbereiche A1a, A1b bzw. A2a, A2b und je eine die zwei Ansteuerbereiche A1a und A1b bzw. A2a und A2b mit definiertem Strömungsquerschnitt verbindende kanalartige Verbindungen K1 bzw. K1. Dabei ist jeder Ansteuerbereich A1a, A1b, A2a, A2b je einem Leistungsventil L1a, L1b, L2a, L2b zugeordnet, wie dies durch die in ihrem Aufbauschema zueinander korrespondierenden Bezugszeichen deutlich wird.

Die beiden von je einem elektropneumatischen Pilotventil P1, P2 mit einem Steuerdruck beaufschlagbaren Steuerdruckbereiche S1 und S2, welche zwischen dem Leistungsstufengehäuse 4 und dem Pilotstufengehäuse 3 ausgebildet sind, werden somit bei vollständig zusammengebauter Ventilgruppe 1 leistungsstufengehäuseseitig durch die (zum Pilotstufengehäuse weisende) Oberfläche der Membran M begrenzt und sind seitlich umschlossen von dem jeweiligen Dichtglied D1 bzw. D2. Pilotstufengehäuseseitig erfolgt die Begrenzung des jeweiligen Steuerdruckbereichs S1 und S2 durch die zum Leistungsstufengehäuse 4 weisende Oberfläche des Pilotstufengehäuses 3.

Im vorliegenden Ausführungsbeispiel der Erfindung erstreckt sich die Membran M bis an den seitlichen Rand des obersten Gehäuseteils 4a des Leistungsstufengehäuses 4, was jedoch keinesfalls zwingend ist. Vielmehr kann die Membran M in ihrer flächigen Erstreckung auch vom seitlichen Rand zurückgesetzt sein, um den vorteilhaft im Randbereich erfolgenden Anschluss des Pilotstufengehäuses 3 an das Leistungsstufengehäuse 4 zu erleichtern. Grundsätzlich reicht es sogar aus, wenn die Membran M ausschließlich im Bereich der beiden Steuerdruckbereiche S1, S2 vorgesehen ist, so dass prinzipiell auch zwei einzelne Membranen in den genannten Bereichen vorgesehen sein könnten

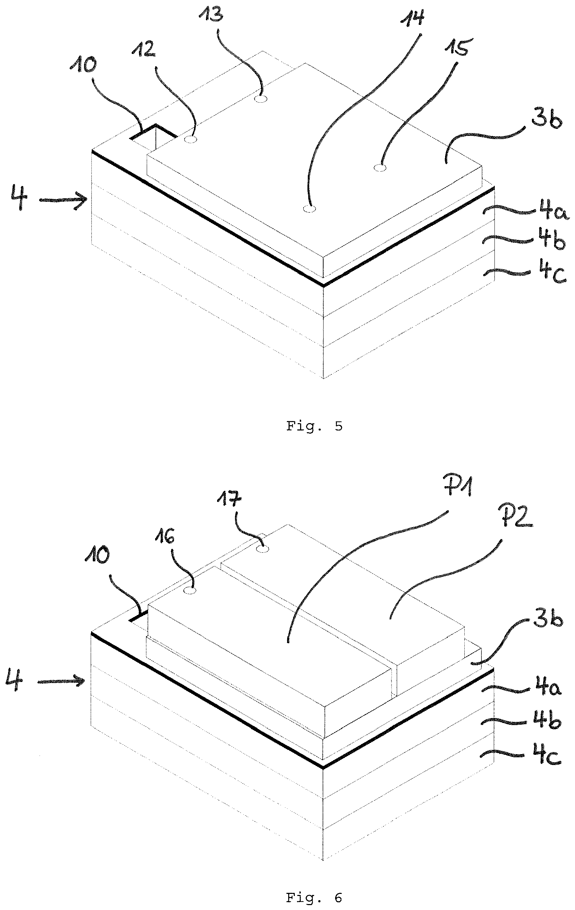

Fig. 5, in welcher der in Fig. 4 dargestellte Teil des Gehäuses 2 der erfindungsgemäßen Ventilgruppe 1 um eine Verteilerplatte 3b ergänzt wurde, zeigt, dass die beiden Steuerdruckbereiche S1, S2 schließlich nach oben durch eine Verteilerplatte 3b begrenzt werden, die ihrerseits einen Teil des Pilotstufengehäuses 3 darstellt, was aus den Fig. 7, 8, 9a und 9b noch besser deutlich wird. Die Oberseite der Verteilerplatte 3b wird vorliegend von insgesamt vier Bohrungen 12, 13, 14, 15 durchdrungen, von denen die in Fig. 5 weiter links befindlichen Bohrungen 12, 13 zur Druckversorgung der Pilotventile P1, P2 dienen, während die weiter rechts dargestellten Bohrungen 14, 15 je einem Pilotventil P1, P2 zugeordnet sind und pilotstufengehäuseseitige Ausgänge des jeweiligen Pilotventils P1, P2 darstellen, die in erfindungsgemäßer Weise - mit ihrem an der zum Leistungsstufengehäuse 4 weisenden Ende - in je einen der zwei Steuerbereiche S1, S2 (vorliegend im Bereich der Ansteuerbereiche A1a und A2a) münden.

In Fig. 6 sind noch die unmittelbar oberhalb der Verteilplatte 3b angeordneten Pilotstufenventile P1, P2 ergänzt, die oberseitige je eine Entlüftungsöffnung 16, 17 haben, die zu den in Fig. 1 bereits gezeigten Entlüftungsöffnungen 5, 6 in der Oberseite des Basiskörpers 3a des Pilotstufengehäuses 3 korrespondieren und mit diesen fluchten. Wenn nun noch der Basiskörper 3a des Pilotstufengehäuses 3 montiert wird, dann ist die erfindungsgemäße Ventilgruppe 1, deren Funktionsweise nachfolgend anhand der weiteren Figuren noch näher erläutert wird, komplettiert, wie in Fig. 1 bereits dargestellt.

Die Fig. 7 und 8 zeigen zwei Schnittdarstellungen durch das bereits anhand der Figuren 1 - 6 beschriebene Ausführungsbeispiel einer erfindungsgemäßen Ventilgruppe 1 gemäß den Schnittlinien A-A und B-B aus Fig. 1.

Aus den Fig. 7 und 8 ist ersichtlich, dass an dem untersten Gehäuseteil 4c des Leistungsstufengehäuses 4 in Form von geeigneten Gehäuseöffnungen bzw. pneumatischen Anschlüssen ein Druckluftanschluss 18 (Fig. 7), ein erster Arbeitsausgang 19 (Fig. 8) und ein Entlüftungsanschluss 20 (Fig. 8) vorgesehen sind.

Dabei ist vorliegend der Druckluftanschluss 18, wie aus Fig. 7 ersichtlich, an die zwei in Fig. 7 dargestellten Leistungsventile L1a und L2b angeschlossen, d.h. mit diesen durch geeignete Kanalführung innerhalb des Leistungsstufengehäuses 4 fluidtechnisch verschalten.

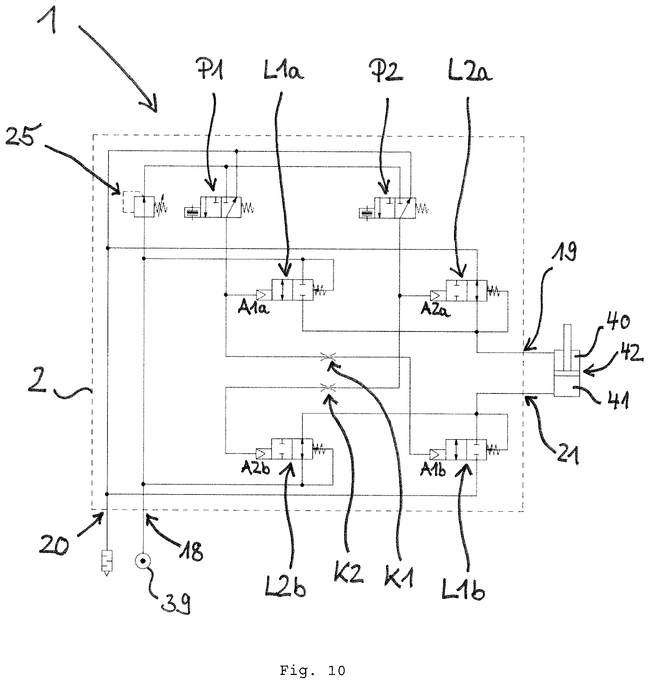

Der erste Arbeitsausgang 19 ist vorliegend an die zwei in Fig. 8 dargestellten Leistungsventile L1a und L2a angeschlossen. Weiterhin ist am untersten Gehäuseteil 4c noch ein zweiter (lediglich schematisch im Pneumatikschaltplan gemäß Fig. 10 gezeigter) Arbeitsausgang 21 vorgesehen, welcher in vergleichbarer Anordnung mit den beiden nicht in Fig. 8 dargestellten Leistungsventilen L1b und L2b verschalten ist.

Besagte Leistungsventile L1a und L2b können also - je nach Schaltzustand - den ihnen jeweils zugeordneten Arbeitsausgang wahlweise mit dem Druckluftanschluss verbinden oder von diesem trennen. Die beiden weiteren Leistungsventile L1b und L2a sind demgegenüber an den Entlüftungsanschluss 20 angeschlossen, können also den ihnen jeweils zugeordneten Arbeitsausgang wahlweise mit der Entlüftung verbinden oder von dieser trennen.

Darüber hinaus wird die am Druckluftanschluss 18 bereitgestellte Druckluft, die für übliche pneumatische Anwendungen beispielsweise einen pneumatischen Druck von 6 bar aufweisen kann, über die Kanalstruktur 22, 23, 24 in welcher noch ein Druckregler 25 verbaut ist, außerdem dem Drucklufteingang 26 des ersten Pilotventils P1 zugeführt. Analog wird auch der - nicht dargestellte - Drucklufteingang des zweiten Pilotventils P2 mit der via Druckluftanschluss 18 und Druckregler 25 bereitgestellten Druckluft versorgt.

An dem einzigen Druckluftanschluss 18 der Ventilgruppe 1 sind somit gleichzeitig die zwei in Fig. 7 dargestellten Leistungsventile L1a, L2b und (über den zwischengeschalteten Druckregler 25) die zwei Pilotventile P1 und P2 angeschlossen.

Die beiden Pilotventile P1, P2 sind im vorliegenden Ausführungsbeispiel der Erfindung als besonders schnell und präzise schaltbare piezoelektrische Ventile mit einem Piezo-Biegewandler 27, 28 ausgestaltet, dessen freies Ende (mittels einer elektrischen Spannung) gemäß Doppelpfeil P (vgl. Fig. 7) derart verschwenkt werden kann, dass der Drucklufteingang 26 des jeweiligen Pilotventils P1, P2 bzw. die Entlüftungsöffnung 16, 17 des jeweiligen Pilotventils P1, P2 wahlweise verschlossen oder freigegeben werden kann, wodurch der am Pilotstufengehäuse 3 vorgesehene Ausgang 14, 15 des jeweiligen Pilotventils P1, P2, welcher in je einen der beiden Steuerbereiche S1, S2 mündet, zum Schalten der zugeordneten Leistungsventile L1a, L1b bzw. L2a, L2b wahlweise entlüftet oder mit Druckluft versorgt werden kann.

Das in Fig. 7 rechts dargestellte Leistungsventil L1a und das in den Fig. 7 und 8 nicht dargestellte Leistungsventil L1b, welche beide dem in Fig. 7 dargestellten Pilotventil P1 zugeordnet sind und von diesem geschalten werden, sind beide als "normal geschlossene" Ventile ausgestaltet, d.h. sie trennen im ungeschalteten Zustand (d.h. bei entlüftetem Steuerdruckbereich S1) den Drucklufteingang 18 (Ventil L1a) bzw. die Entlüftung (Ventil L1b) von dem dem jeweiligen Ventil zugeordneten Arbeitsausgang 19 bzw. 21.

Demgegenüber sind das in Fig. 7 links dargestellte Leistungsventil L2b und das in Fig. 8 rechts dargestellte Leistungsventil L2a als "normal offene" Ventile ausgestaltet, d.h. sie erlauben im ungeschalteten Zustand (d.h. bei entlüftetem Steuerdruckbereich S2) eine Verbindung zwischen dem Druckluftanschluss (Ventil L2b) bzw. der Entlüftung 20 (Ventil L2a) und dem dem jeweiligen Ventil zugeordneten Arbeitsausgang 21 bzw. 19.

Jedes Leistungsventil L1a, L1b, L2a, L2b weist vorliegend einen mittels einer Feder F in Richtung zu dem ihm zugeordneten Ansteuerbereich A1a, A1b, A2a, A2b vorgespannten und linear beweglich geführten Ventilkörper V1a, V1b, V2a, V2b auf, dessen ansteuerbereichseitige Oberseite mit der dort befindlichen Membran M gekoppelt ist. Wenn nun also mittels des jeweiligen Pilotventils P1, P2 der Steuerdruck in dem betreffenden Ansteuerbereich A1a, A1b, A2a, A2b über die Betätigungsschwelle erhöht wird, so wird der betreffende Ventilkörper zusammen mit der Membran aus seiner jeweiligen Grundstellung ausgelenkt.

Die "normal geschlossenen" Leistungsventile L1a and L1b (Letzteres ist nicht in den Fig. 7 und 8 dargestellt) werden bei dieser Betätigung von einem Dichtsitz 29 abgehoben, woraufhin der dem jeweiligen Ventil zugeordnete Arbeitsausgang mit dem Druckluftanschluss bzw. dem Entlüftungsanschluss verbunden wird. Die "normal offenen" Leistungsventile L2a und L2b werden bei ihrer Betätigung aus ihrer Grundstellung gegen einen Dichtsitz 30, 31 verschoben, so dass sie dann die zuvor noch gegebene Verbindung zwischen Entlüftungsanschluss und dem jeweiligen Arbeitsausgang sperren. An jedem Ventilkörper V1a, V1b, V2a, V2b der Leistungsventile L1a, L1b, L2a, L2b ist vorliegend eine mit dem jeweiligen Dichtsitz 29, 30, 31 zusammenwirkende Dichtfläche 32, 33, 34 aus einem Elastomermaterial vorgesehen, mit welcher eine besonders geringe Leckage der Leistungsventile L1a, L1b, L2a, L2b erreicht wird.

In den Figuren 7 und 8 ist ferner gut zu erkennen, dass vorliegend die pilotstufengehäuseseitige Verbindung des jeweiligen Pilotventils P1, P2 mit dem ihm zugeordneten Steuerbereich S1, S2 durch die jeweilige Bohrung 14, 15 in der Verteilerplatte 3b besonders kurz ist, da die Pilotventile P1, P2 unmittelbar oberhalb der jeweiligen Einmündung in den Steuerdruckbereich S1, S2 angeordnet sind. Im gegebenen Beispiel mündet der Ausgang des ersten Pilotventils P1 in den Ansteuerbereich A1a des in Fig. 7 rechts und in Fig. 8 links dargestellten Leistungsventils L1a. Derjenige des zweiten Pilotventils P2 mündet in den Ansteuerbereich A2a des in Fig. 8 rechts dargestellten Leistungsventils L2b. Hierdurch ist eine asymmetrische Einmündung in den jeweiligen Steuerbereich S1, S2 gegeben.

Von dem jeweiligen Ansteuerbereich A1a bzw. A2a strömt die vom jeweiligen Pilotventil P1, P2 bei geeignetem Schaltzustand bereitgestellte Druckluft über je eine in dem betreffenden Steuerdruckbereich S1 bzw. S2 vorgesehene kanalartige Verbindung K1 bzw. K2 (vgl. Fig. 4), die seitlich durch das zwischen Pilotstufengehäuse 3 und Leistungsstufengehäuse 4 angeordnete Dichtglied D1 bzw. D2 begrenzt ist, zu dem jeweils zweiten Ansteuerbereich A1b bzw. A2b des betreffenden Steuerdruckbereichs S1 bzw. S2 weiter. Der durch die konkrete Form dieser kanalartigen Verbindung K1, K2 in einfacher Weise definiert vorgegebbare Strömungsquerschnitt und die hierdurch einstellbare Drosselwirkung erlauben dann eine einfache und gezielte Abstimmung der Schaltzeiten der jeweiligen Leistungsventile L1a, L1b, L2a, L2b.

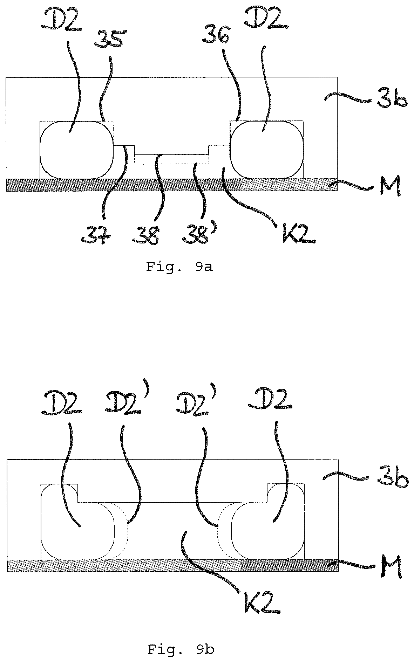

Die Fig. 9a und 9b zeigen jeweils einen Querschnitt durch die kanalartige Verbindung K2 aus Fig. 4 gemäß dortiger Schnittlinie C-C in zwei verschiedenen Ausführungsvarianten. Die kanalartige Verbindung K2 gemäß den Ausführungsbeispielen der Figuren 9a und 9b wird, wie bereits mehrfach erläutert, nach unten durch die Membran M und nach oben durch die Verteilerplatte 3b begrenzt. Seitlich wird sie durch das Dichtglied D2 begrenzt, welches den gesamten Steuerdruckbereich S2 inklusive der beiden Ansteuerbereiche A2a, A2b seitlich umläuft (vgl. Fig. 4).

Bei der Variante gemäß Fig. 9a sind in der Verteilerplatte zwei Nuten 35, 36 vorgesehen, die das als Schnurdichtung ausgeführte Dichtglied D2 (teilweise) aufnehmen, wobei in dem Bereich 37 zwischen den beiden Nuten 35, 36 eine (als Steg längs der kanalartigen Verbindung verlaufende) Erhebung 38 vorgesehen ist. Durch Variation der Höhe dieser Erhebung, wie durch die Variante 38' veranschaulicht, lassen sich somit auf einfache Weise der Strömungsquerschnitt der kanalartigen Verbindung K2 und damit die Schaltzeiten der zugeordneten Leistungsventile verändern. Bei einer aus Kunststoff in einem Spritzgussverfahren hergestellten Verteilerplatte 3b können entsprechende Variationen auf einfache Weise durch einen entsprechend veränderbaren Werkzeugeinsatz in dem betreffenden Spritzgusswerkzeug realisiert werden, ohne dass hierfür neue Spritzgussformen benötigt werden.

Bei der nicht erfindungsgemäßen Variante gemäß Fig. 9b wird einfach die Größe bzw. der Durchmesser des zwischen Verteilerplatte 3b und Membran M verklemmten Dichtglieds D2 bzw. D2'variiert, womit ebenfalls in einfacher Weise der Strömungsquerschnitt der kanalartigen Verbindung variierbar ist.

Fig. 10 zeigt schließlich noch einen Pneumatikschaltplan eines Ausführungsbeispiels einer erfindungsgemäßen Ventilgruppe 1, bei welchem die von einer Druckluftversorgung 39 stammende Druckluft am Druckluftanschluss 18 der Ventilgruppe 1 angeschlossen ist. Diese Druckluft wird den beiden links übereinander dargestellten Leistungsventilen L1a und L2b sowie - über einen Druckregler 25 - den beiden elektrisch bzw. elektronisch ansteuerbaren Pilotventilen P1 und P2 zugeführt. Ferner ist ein Entlüftungsanschluss 20 vorgesehen, an den die beiden verbleibenden Leistungsventile L2a und L1b angeschlossen sind, wobei vorliegend - in geringfügiger Abwandlung zum vorstehend erläuterten Ausführungsbeispiel der Erfindung - auch die Pilotventile P1 und P2 mit dem gemeinsamen Entlüftungsanschluss 20 gekoppelt sind. Die Ausgänge von je zwei Leistungsventilen L1a, L2a und L2b, L1b sind jeweils fluidleitend verbunden und bilden einen ersten Arbeitsausgang 19 und einen zweiten Arbeitsausgang 21 der erfindungsgemäßen Ventilgruppe 1.

Dabei ist der erste Arbeitsausgang 19 mit einer ersten Antriebskammer 40 und der zweite Arbeitsausgang 21 mit einer zweiten Antriebskammer 41 eines mittels der Ventilgruppe 1 zu betätigenden pneumatischen Antriebs bzw. Arbeitsglieds 42 verbunden.

Die pneumatische Verbindung der Pilotventile P1, P2 mit den von diesen jeweils geschalteten Leistungsventilen L1a, L1b bzw. L2a, L2b erfolgt im gegebenen Beispiel dadurch, dass der jeweilige Ausgang des Pilotventils P1, P2 zunächst in einen einem ersten Leistungsventil L1a, L2a zugeordneten Ansteuerbereich A1a bzw. A2a mündet, wobei die Druckluft von dort über eine (eine Drosselwirkung erzeugende) erfindungsgemäß ausgestaltete kanalartige Verbindung K1 bzw. K2 zum Ansteuerbereich A2a bzw. A2b des zweiten von dem betreffenden Pilotventil P1, P2 geschalteten Leistungsventils L1b bzw. L2b führt.

In der Grundstellung, dem sog. Fail-Safe-Zustand, wird durch die konkrete Anordnung der vier Leistungsventile L1a, L1b, L2a, L2b die Antriebskammer 40 entlüftet und die Antriebskammer 41 belüftet. Diese Stellung unterscheidet sich von der Normalstellung des Ventils im Betrieb. In diesem wird der Antrieb 42 zunächst durch eine geeignete Ansteuerung der Pilotventile P1, P2 an seine Sollposition gefahren. Anschließend wird ein Haltezustand eingestellt, bei dem das Pilotventil P1 im Normalzustand verbleibt und das Pilotventil P2 geschaltet ist. Dadurch befinden sich die Ventile L1a und L1b in ihrer Normalstellung, die Ventile L2a und L2b in ihrer geschalteten Stellung.

Der Aufbau der Leistungsventile ist dabei so gestaltet, dass der jeweils am dortigen Eingang anliegende Druck rückstellend auf das Ventil wirkt. Für die Ventile L1a und L2b ist dieser Druck jeweils der Versorgungsdruck, also beispielsweise 6 bar. Für die Ventile L2a und L1b ist dieser Druck der jeweils im Antrieb herrschende Kammerdruck, der zwischen 0 und 6 bar liegen kann.

Aus regelungstechnischer Sicht ist es in diesem Anwendungsfall vorteilhaft, wenn alle Leistungsventile die gleichen Schaltzeiten aufweisen. D.h. eine Änderung des Schaltzustands der Pilotventile soll bevorzugt eine gleich schnelle Änderung des Schaltzustands an allen vier Leistungsventilen bewirken. Insbesondere soll vorteilhaft die Änderung des Schaltzustands der Leistungsventile L1a und L1b gleich schnell erfolgen, wie auch diejenige der Leistungsventile L2a und L2b.

Hier wirkt sich, wenn nicht im erfindungsgemäßen Sinne in einfacher Weise Einfluss auf die Schaltzeiten der verschiedenen Ventile genommen werden kann, die Konstruktion der Leistungsventile negativ aus, was hier beispielhaft an den Leistungsventilen L1a und L1b erläutert werden soll. Im Normalzustand während des Betriebs wirkt auf das Ventil L1a unterstützend der Versorgungsdruck. Um dieses Ventil also zu betätigen, muss sowohl die hierdurch hervorgerufene Kraft als auch diejenige der rückstellend wirkenden Feder F überwunden werden. Auf das Ventil L1b wirkt hingegen eine typischerweise geringere Kraft, nämlich nur die Federkraft sowie die durch den Kammerdruck erzeugte Kraft. Entsprechend wird dieses Ventil normalerweise bereits bei einem geringeren Druck betätigt. Um diese Diskrepanz anzugleichen ist es daher vorteilhaft, in erfindungsgemäßer Weise einen Steuerdruckbereich zu realisieren, bei dem eine kanalartige Verbindung mit definiertem Strömungsquerschnitt zwischen zwei (verschiedenen Leistungsventilen zugeordneten) Ansteuerbereichen vorgesehen. Hiermit lässt sich nämlich beispielsweise für die pneumatische Betätigung des Leistungsventils L1b eine Drosselwirkung erzeugen. Diese verzögert den Druckanstieg in dem dem Leistungsventil L1b zugeordneten Ansteuerbereich A1b gegenüber dem Druckanstieg in dem dem Leistungsventil L1a zugeordneten Ansteuerbereich A1a. Entsprechend führt diese Maßnahme zu einer Angleichung der Schaltzeiten.

Im Falle der Ventile L2a und L2b stellt sich das Verhalten im gegebenen Ausführungsbeispiel wie folgt dar. Beide Ventile sind im normalen Betriebszustand geschaltet. Auf das Ventil L2a wirken in diesem Schaltzustand sowohl der Kammerdruck als die Federrückstellung entgegen. Auf das Ventil L2b wirken hingegen der volle Versorgungsdruck sowie die Federrückstellung. Entsprechend schaltet erneut das Ventil L2b bereits bei einem geringeren Druckabfall in dem ihm zugeordneten Ansteuerbereich, da hier eine größere Gegenkraft rückstellend wirkt. Auch dort kann somit durch eine zeitliche Verzögerung des Druckabfalls mittels der erfindungsgemäß auf einfache Weise erzeugbaren Drossel eine Angleichung der Schaltzeiten erreicht werden.

Eine erfindungsgemäße Ventilgruppe weist insgesamt eine hohe Flexibilität auf, um die Schaltzeiten der verschiedenen Leistungsventile dem jeweils gegebenen Anwendungsfall anzupassen.

## Patentansprüche

1. Elektropneumatische Ventilgruppe (1), insbesondere zur Betätigung eines pneumatischen Arbeitsgliedes (42), umfassend eine elektropneumatische Pilotstufe mit mindestens einem Pilotventil (P1, P2) und eine von der Pilotstufe angesteuerte pneumatische Leistungsstufe mit mindestens zwei Leistungsventilen (Lla, L1b, L2a, L2b), wobei jedes Pilotventil (P1, P2) der Pilotstufe zwei pneumatisch mit dem Pilotventil (P1, P2) gekoppelte Leistungsventile (Lla, L1b; L2a, L2b) der Leistungsstufe schaltet und
wobei die Ventilgruppe (1) ein Gehäuse (2) mit einem elektrischen Signaleingang (7), einem Druckluftanschluss (18), wenigstens einem Entlüftungsanschluss (20) und wenigstens einem Arbeitsausgang (19, 21) aufweist,
wobei das Gehäuse (2) schichtartig aufgebaut ist mit mindestens einem Pilotstufengehäuse (3) und mindestens einem entlang einer im Wesentlichen ebenen Trennfläche (T) an diesem angeschlossenen Leistungsstufengehäuse (4),
wobei zwischen dem mindestens einen Pilotstufengehäuse (3) und dem mindestens einen Leistungsstufengehäuse (4) mindestens ein Dichtglied (D1, D2) aufgenommen ist, das einen zwischer dem Pilotstufengehäuse (3) und dem Leistungsstufengehäuse (4) angeordneten Steuerdruckbereich (S1, S2) umschließt, wobei der Steuerdruckbereich (S1, S2) zwei Ansteuerbereiche (A1a, A1b; A2a, A2b) für die zwei mit dem Pilotventil (P1, P2) gekoppelten Leistungsventile (Lla, L1b; L2a, L2b) und eine kanalartige Verbindung (K1; K2) mit definiertem Strömungsquerschnitt zwischen den zwei Ansteuerbereichen (Ala, A1b; A2a, A2b) aufweist, wobei ein in dem Pilotstufengehäuse (3) vorgesehener Ausgang (14, 15) des zugeordneten Pilotventils (P1, P2) in den Steuerdruckbereich (S1, S2) mündet, **dadurch gekennzeichnet,**
**dass** das wenigstens eine Dichtglied (D1, D2) als geschlossene Schnurdichtung ausgeführt ist, die den Steuerdruckbereich (S1, S2) seitlich umläuft, dass die dem Leistungsstufengehäuse (4) zugewandte Oberfläche des Pilotstufengehäuses (3) Nuten (35, 36) zur Aufnahme der Schnurdichtung aufweist, und dass an der dem Leistungsstufengehäuse (4) zugewandten Oberfläche des Pilotstufengehäuses (3), im Bereich der kanalartigen Verbindung zwischen zwei einander benachbarten Nuten (35, 36), Erhebungen (38, 38') ausgebildet sind.

2. Ventilgruppe nach Anspruch 1,
**dadurch gekennzeichnet,**
**dass** der Ausgang (14, 15) des Pilotventils (P1, P2) in asymmetrischer Anordnung in den Steuerdruckbereich (S1, S2) mündet.

3. Ventilgruppe nach Anspruch 2,
**dadurch gekennzeichnet,**
**dass** der Ausgang (14, 15) des Pilotventils (P1, P2) in einen der Ansteuerbereiche (Ala, A1b; A2a, A2b) des dem Pilotventil(P1, P2) zugeordneten Steuerdruckbereichs (S1, S2) mündet.

4. Ventilgruppe nach einem der Ansprüche 1 bis 3,
**dadurch gekennzeichnet,**
**dass** die dem Leistungsstufengehäuse (4) zugewandte Oberfläche des Pilotstufengehäuses (3) auf einer Verteilerplatte (3b) ausgeführt ist, welche zusammen mit einem Basiskörper (3a) das Pilotstufengehäuse (3) bildet.

5. Ventilgruppe nach Anspruch 4,
**dadurch gekennzeichnet,**
**dass** in dem Pilotstufengehäuse (3) mindestens ein piezoelektrisches Pilotventil (P1, P2) aufgenommen ist.

6. Ventilgruppe nach einem der Ansprüche 1 bis 5,
**dadurch gekennzeichnet,**
**dass** die Druckluftversorgung des mindestens einen Pilotventils (P1, P2) durch die Trennfläche (T) hindurch geführt ist.

7. Ventilgruppe nach einem der Ansprüche 1 bis 6,
**dadurch gekennzeichnet,**
**dass** in dem Pilotstufen- und/oder Leistungsstufengehäuse (3 bzw. 4) ein Druckregler (25) für die Druckluftversorgung des wenigstens einen Pilotventils (P1, P2) integriert ist.

8. Ventilgruppe nach einem der Ansprüche 1 bis 7,
**dadurch gekennzeichnet,**
**dass** an der dem Pilotstufengehäuse (3) zugewandten Oberfläche des Leistungsstufengehäuses (4) eine Membran (M) angeordnet ist, welche auf ihrer dem Pilotstufengehäuse (3) zugewandten Seite den Steuerdruckbereich (S1; S2) begrenzt und welcher an ihrer gegenüberliegenden Seite Ventilkörper (V1a, V1b;
V2a, V2b) der beiden zugeordneten Leistungsventile (Lla, L1b; L2a, L2b) anliegen.

9. Ventilgruppe nach einem der Ansprüche 1 bis 8,
**dadurch gekennzeichnet,**
**dass** genau zwei Pilotventile (P1, P2) und vier Leistungsventile (Lla, L1b, L2a, L2b) vorgesehen sind, wobei von jedem Pilotventil über je einen Steuerdruckbereich zwei Leistungsventile (Lla, L1b, L2a, L2b) angesteuert werden.

10. Ventilgruppe nach Anspruch 9,
**dadurch gekennzeichnet,**
**dass** die vier Leistungsventile (L1a, L1b, L2a, L2b) in Draufsicht auf die Trennfläche (T) im Wesentlichen auf den Ecken eines Quadrats angeordnet sind, wobei jeweils die einander diametral gegenüberliegenden Leistungsventile (Lla, L1b, L2a, L2b) miteinander gekoppelt sind.

11. Ventilgruppe nach Anspruch 9 oder 10,
**dadurch gekennzeichnet,**
**dass** die beiden Steuerdruckbereiche (S1, S2) durch je ein Dichtglied (D1, D2) oder durch insgesamt ein Dichtglied umgrenzt sind.

12. Ventilgruppe nach einem der Ansprüche 9 - 11,
**dadurch gekennzeichnet,**
**dass** das Gehäuse (2) wenigstens vier pneumatische Anschlüsse aufweist in Form von
- zwei paarweise an die vier Leistungsventile (Lla, L1b, L2a, L2b) angeschlossenen Arbeitsausgängen (19, 21),
- einem an zwei der Leistungsventile (Lla, L2b) angeschlossenen Druckluftanschluss (18) und
- einer an die beiden anderen Leistungsventile (L1b, L2a) angeschlossenen Entlüftung (20).

13. Ventilgruppe nach einem der Ansprüche 1 bis 12,
**dadurch gekennzeichnet,**
**dass** das Leistungsstufengehäuse (4) zwei- oder dreiteilig ausgeführt ist.

14. Ventilgruppe nach einem der Ansprüche 1 bis 13,
**dadurch gekennzeichnet,**
**dass** die Leistungsventile (L1a, L1b, L2a, L2b) als gegen einen Dichtsitz (30, 31) verschiebbare und/oder von einem Dichtsitz (29) abhebbare Sitzventile ausgeführt sind.

15. Ventilgruppe nach einem der Ansprüche 1 bis 14,
**dadurch gekennzeichnet,**
**dass** das Pilotstufengehäuse (3) und das Leistungsstufengehäuse (4) jeweils als Spritzgießteile aus Kunststoff ausgeführt sind.

16. Ventilgruppe nach einem der Ansprüche 1 bis 15,
**dadurch gekennzeichnet,**
**dass** das Leistungsstufengehäuse (4) einen separaten Gehäuseteil (4c) aufweist, welcher zumindest den Drucklufteingang (18) und die pneumatischen Arbeitsausgänge (19, 21) aufweist.

## Claims

1. An electropneumatic valve group (1), especially for actuating a pneumatic working element (42), comprising: an electropneumatic pilot stage with at least one pilot valve (P1, P2) and a pneumatic power stage, activated by the pilot stage, with at least two power valves (Lla, L1b, L2a, L2b), wherein each pilot valve (P1, P2) of the pilot stage switches two power valves (Lla, L1b; L2a, L2b) coupled pneumatically with the pilot valve (P1, P2) and wherein the valve group (1) is provided with a housing (2) having an electrical signal input (7), a compressed-air port (18), at least one vent port (20) and at least one working outlet (19, 21), wherein the housing (2) has a layered structure with at least one pilot-stage housing (3) and at least one power-stage housing (4) connected thereto along a substantially plane separating face (T),
wherein at least one sealing element (D1, D2), which encloses a control-pressure region (S1, S2) disposed between the pilot-stage housing (3) and the power-stage housing (4), is received between the at least one pilot-stage housing (3) and the at least one power-stage housing (4),
wherein the control-pressure region (S1, S2) is provided with two activation regions (Ala, A1b; A2a, A2b) for the two power valves (L1a, L1b; L2a, L2b) coupled with the pilot valve (P1, P2) and one duct-like connection (K1; K2) with a defined flow cross section between the two activation regions (Ala, A1b; A2a, A2b),
wherein an outlet (14, 15) of the associated pilot valve (P1, P2) provided in the pilot-stage housing (3) discharges into the control-pressure region (S1, S2),
**characterized in that**
the at least one sealing element (D1, D2) is constructed as a closed cord seal, which laterally encircles the control-pressure region (S1, S2), that the surface of the pilot-stage housing (3) turned toward the power-stage housing (4) has grooves (35, 36) that receive the cord seal, and that in the region of the duct-like connection elevations (38, 38') are formed on the surface of the pilot-stage housing (3) turned toward the power-stage housing (4), between the two grooves (35, 36) adjacent to one another.

2. The valve group of claim 1,
**characterized in that**
the outlet (14, 15) of the pilot valve (P1, P2) discharges in asymmetric arrangement into the control-pressure region (S1, S2).

3. The valve group of claim 2,
**characterized in that**
the outlet (14, 15) of the pilot valve (P1, P2) discharges into one of the activation regions (Ala, A1b; A2a, A2b) of the control-pressure region (S1, S2) associated with the pilot valve (P1, P2).

4. The valve group of one of claims 1 to 3,
**characterized in that**
the surface of the pilot-stage housing (3) turned toward the power-stage housing (4) is constructed on a distributor plate (3b), which together with a base member (3a) forms the pilot-stage housing (3).

5. The valve group of claim 4,
**characterized in that**
at least one piezoelectric pilot valve (P1, P2) is received in the pilot-stage housing (3).

6. The valve group of one of claims 1 to 5,
**characterized in that**
the compressed-air supply of the at least one pilot valve (P1, P2) is routed through the separating face (T).

7. The valve group of one of claims 1 to 6,
**characterized in that**
a pressure regulator (25) for the compressed-air supply of the at least one pilot valve (P1, P2) is integrated in the pilot-stage housing and/or power-stage housing (3 or 4).

8. The valve group of one of claims 1 to 7,
**characterized in that**
a diaphragm (M), which on its side turned toward the pilot-stage housing (3) bounds the control-pressure region (S1; S2) and on which, on its opposite side, valve bodies (Via, V1b; V2a, V2b) of the two associated power valves (Lla, L1b; L2a, L2b) bear, is disposed on the surface of the power-stage housing (4) turned toward the pilot-stage housing (3).

9. The valve group of one of claims 1 to 8,
**characterized in that**
exactly two pilot valves (P1, P2) and four power valves (Lla, L1b, L2a, L2b) are provided, wherein two power valves (Lla, L1b, L2a, L2b) are activated by each pilot valve via one control-pressure region each.

10. The valve group of claim 9,
**characterized in that**
the four power valves (Lla, L1b, L2a, L2b) are disposed in overhead view on the separating face (T) substantially at the corners of a square, wherein the respective power valves (Lla, L1b, L2a, L2b) disposed diametrically opposite one another are coupled with one another.

11. The valve group of claim 9 or claim 10,
**characterized in that**
the two control-pressure regions (S1, S2) are enclosed by one sealing element (D1, D2) each or by one sealing element in total.

12. The valve group of one of claims 9 to 11,
**characterized in that**
the housing (2) has at least four pneumatic ports in the form of
- two working outlets (19, 21) connected in pairs to the four power valves (L1a, L1b, L2a, L2b),
- one compressed-air inlet (18) connected to two of the power valves (Lla, L2b) and
- one vent (20) connected to the two other power valves (Lib, L2a).

13. The valve group of one of claims 1 to 12,
**characterized in that**
the power-stage housing (4) is of two-piece or three-piece construction.

14. The valve group of one of claims 1 to 13,
**characterized in that**
the power valves (Lla, L1b, L2a, L2b) are constructed as seat valves that can be moved against a sealing seat (30, 31) and/or lifted from a sealing seat (29).

15. The valve group of one of claims 1 to 14,
**characterized in that**
the pilot-stage housing (3) and the power-stage housing (4) are respectively constructed as injection-molded parts of plastic.

16. The valve group of one of claims 1 to 15,
**characterized in that**
the power-stage housing (4) has a separate housing part (4c), which is provided with at least the compressed-air port (18) and the pneumatic working outlets (19, 21).

## Revendications

1. Groupe de vannes électropneumatique (1), en particulier pour l'actionnement d'un organe de travail pneumatique (42), comportant un étage pilote électropneumatique avec au moins une vanne pilote (P1, P2) et un étage de puissance pneumatique actionné par l'étage pilote, avec au moins deux vannes de puissance (L1a, L1b, L2a, L2b), dans lequel chaque vanne pilote (P1, P2) de l'étage de puissance commute deux vannes de puissance (L1a, L1b; L2a, L2b) de l'étage de puissance accouplées pneumatiquement à la vanne pilote (P1, P2) et dans lequel le groupe de vannes (1) présente un boîtier (2) avec une entrée de signal électrique (7), un raccord d'air comprimé (18), au moins un raccord d'aération (20) et au moins une sortie de travail (19, 21),
dans lequel le boîtier (2) est construit de façon stratifiée avec au moins un boîtier d'étage pilote (3) et au moins un boîtier d'étage de puissance (4) raccordé à celui-ci le long d'une surface de séparation (T) essentiellement plane,
dans lequel au moins un organe d'étanchéité (D1, D2) est reçu entre l'au moins un boîtier d'étage pilote (3) et l'au moins un boîtier d'étage de puissance (4), lequel entoure une région de pression de commande (S1, S2) disposée entre le boîtier d'étage pilote (3) et le boîtier d'étage de puissance (4),
dans lequel la région de pression de commande (S1, S2) présente deux régions d'actionnement (Ala, A1b ; A2a, A2b) pour les deux vannes de puissance (L1a, L1b ; L2a, L2b) accouplées à la vanne pilote (P1, P2) et une liaison du genre canal (K1 ; K2) avec une section transversale d'écoulement définie entre les deux régions d'actionnement (Ala, A1b ; A2a, A2b),
dans lequel une sortie (14, 15) de la vanne pilote (P1, P2) correspondante, prévue dans le boîtier d'étage pilote (3), débouche dans la région de pression de commande (S1, S2),
**caractérisé en ce que**
l'au moins un organe d'étanchéité (D1, D2) est conçu comme un cordon d'étanchéité fermé, lequel entoure la région de pression de commande (S1, S2) latéralement,
**en ce que** la surface du boîtier d'étage pilote (3) tournée vers le boîtier d'étage de puissance (4) présente des rainures (35, 36) destinées à recevoir le cordon d'étanchéité, et
**en ce que** des protubérances (38, 38') sont formées sur la surface du boîtier d'étage pilote (3) tournée vers le boîtier d'étage de puissance (4), dans la région de la liaison du genre canal entre deux rainures (35, 36) adjacentes.

2. Groupe de vannes selon la revendication 1,
**caractérisé en ce que**
la sortie (14, 15) de la vanne pilote (P1, P2) débouche dans la région de pression de commande (S1, S2) dans un agencement asymétrique.

3. Groupe de vannes selon la revendication 2,
**caractérisé en ce que**
la sortie (14, 15) de la vanne pilote (P1, P2) débouche dans une région de pression de commande (S1, S2) attribuée à l'une des régions d'actionnement (Ala, A1b ; A2a, A2b) de la vanne pilote (P1, P2).

4. Groupe de vannes selon l'une des revendications 1 à 3,
**caractérisé en ce que**
la surface du boîtier d'étage pilote (3) tournée vers le boîtier d'étage de puissance (4) est réalisée sur une plaque de distribution (3b), laquelle forme le boîtier d'étage pilote (3) conjointement avec un corps de base (3a).

5. Groupe de vannes selon la revendication 4,
**caractérisé en ce que**
au moins une vanne pilote piézoélectrique (P1, P2) est reçue dans le boîtier d'étage pilote (3).

6. Groupe de vannes selon l'une des revendications 1 à 5,
**caractérisé en ce que**
l'alimentation en air comprimé de l'au moins une vanne pilote (P1, P2) est guidée à travers la surface de séparation (T).

7. Groupe de vannes selon l'une des revendications 1 à 6,
**caractérisé en ce que**
un régulateur de pression (25) pour l'alimentation en air comprimé de l'au moins une vanne pilote (P1, P2) est intégré dans le boîtier d'étage pilote et/ou d'étape de puissance (3 ou 4).

8. Groupe de vannes selon l'une des revendications 1 à 7,
**caractérisé en ce que**
une membrane (M) est disposée sur la surface du boîtier d'étage de puissance (4) tournée vers le boîtier d'étage pilote (3), laquelle délimite la région de pression de commande (S1 ; S2) sur son côté tourné vers le boîtier d'étage pilote (3) et sur le côté opposé de laquelle s'appliquent des corps de vanne (V1a, V1b; V2a, V2b) des deux vannes de puissance (L1a, L1b; L2a, L2b).

9. Groupe de vannes selon l'une des revendications 1 à 8,
**caractérisé en ce que**
il est prévu précisément deux vannes pilotes (P1, P2) et quatre vannes de puissance (L1a, L1b; L2a, L2b),
dans lequel deux vannes de puissance (L1a, L1b, L2a, L2b) sont actionnées par chaque vanne pilote respectivement par le biais d'une région de pression de commande.

10. Groupe de vannes selon la revendication 9,
**caractérisé en ce que**
les quatre vannes de puissance (L1a, L1b, L2a, L2b) sont disposées essentiellement sur les coins d'un carré dans une vue en plan sur la surface de séparation (T), dans lequel les vannes de puissance (L1a, L1b, L2a, L2b) diamétralement opposées l'une à l'autre sont respectivement accouplées entre elles.

11. Groupe de vannes selon la revendication 9 ou 10,
**caractérisé en ce que**
les deux régions de pression de commande (S1, S2) sont délimitées respectivement par un organe d'étanchéité (D1, D2) ou conjointement par un organe d'étanchéité.

12. Groupe de vannes selon l'une des revendications 9 à 11,
**caractérisé en ce que**
le boîtier (2) présente au moins quatre raccords pneumatiques, sous la forme de
- deux sorties de travail (19, 21) raccordées par paires aux quatre vannes de puissance (L1a, L1b, L2a, L2b),
- un raccord d'air comprimé (18) raccordé à deux vannes de puissance (L1a, L2b) et
- une aération (20) raccordée aux deux autres vannes de puissance (L1b, L2a).

13. Groupe de vannes selon l'une des revendications 1 à 12,
**caractérisé en ce que**
le boîtier d'étage de puissance (4) est conçu en deux ou trois parties.

14. Groupe de vannes selon l'une des revendications 1 à 13,
**caractérisé en ce que**
les vannes de puissance (L1a, L1b, L2a, L2b) sont conçues comme des vannes à siège déplaçables contre un siège d'étanchéité (30, 31) et/ou relevables d'un siège d'étanchéité (29).

15. Groupe de vannes selon l'une des revendications 1 à 14,
**caractérisé en ce que**
le boîtier d'étage pilote (3) et le boîtier d'étage de puissance (4) sont conçus respectivement comme des pièces en plastique moulées par injection.

16. Groupe de vannes selon l'une des revendications 1 à 15,
**caractérisé en ce que**
le boîtier d'étage de puissance (4) présente une partie de boîtier séparée (4c), laquelle présente au moins l'entrée d'air comprimé (18) et les sorties de travail pneumatiques (19, 21).
